Europäisches Patentamt

European Patent Office

Office européen des brevets

(19)

(11) Veröffentlichungsnummer: **0 189 554**
A1

## (12) EUROPÄISCHE PATENTANMELDUNG

(21) Anmeldenummer: 85115237.1

(22) Anmeldetag: 30.11.85

(51) Int. Cl.⁴: **G 01 N 1/04**
B 22 D 11/126, B 23 K 7/02

(30) Priorität: 05.12.84 DE 8435580 U

(43) Veröffentlichungstag der Anmeldung:
06.08.86 Patentblatt 86/32

(84) Benannte Vertragsstaaten:
AT BE CH DE FR GB IT LI LU NL SE

(71) Anmelder: AUTE Gesellschaft für autogene Technik mbH
Wassbergstrasse 28
CH-8127 Forch/ZH(CH)

(72) Erfinder: Lotz, Horst K.
Kiefernweg 13
D-6200 Wiesbaden-Delkenheim(DE)

(72) Erfinder: Moon, Terence Edward
"Cornerways" 56, Foan Hill
Swannington Leicestershire LE6 4RD(GB)

(74) Vertreter: Blumbach Weser Bergen Kramer Zwirner
Hoffmann Patentanwälte
Sonnenbergerstrasse 43
D-6200 Wiesbaden 1(DE)

(54) Brennschneidmaschine mit Probeschneideinrichtung.

(57) Eine Brennschneidmaschine zum Schneiden von Strang-gußstücken mit einer am Brennerwagen angeordneten Probeschneideinrichtung zur Erzielung von Probeschnitten an Werkstücken unterschiedlicher Probendicke ist dadurch gekennzeichnet, daß die Probeschneideinrichtung einen Probeschneidbrenner (2; 21) aufweist, der in verschiedenen Schneidpositionen bewegbar ist.

EP 0 189 554 A1

Fig. 1

## Brennschneidmaschine mit Probeschneideinrichtung

_Die Erfindung betrifft eine Brennschneidmaschine
Schneiden von Stranggußwerkstücken mit einer am Brennerwagen angeordneten Probeschneideinrichtung zur Erzielung
von Probeschnitten an Stücken unterschiedlicher Probendicke.

Es ist bekannt, bei derartigen Brennschneidmaschinen mehrere Probeschneidbrenner in unterschiedlichen Positionen vorzusehen, die entsprechend der gewünschten Probendicke der Durchführung eines Probeschnittes betrieben werden. Derartige Probeschneideinrichtungen sind
sehr aufwendig. Dabei ist es zwar möglich, eine unterschiedliche Probendicke zu erzielen, jedoch ist die
Probendicke durch die vorgesehene Anordnung der Probebrenner festgelegt.

Der Erfindung liegt daher die Aufgabe zugrunde,
eine Brennschneidmaschine mit einer Probeschneideinrichtung verfügbar zu machen, die weniger aufwendig ist und
das Einstellen der Probendicke in einfacher Weise erlaubt.

Die Erfindung besteht darin, daß bei einer Brennschneidmaschine der eingangs genannten Art die Probeschneideinrichtung einen Probeschneidbrenner aufweist,
der in verschiedene Schneidpositionen bewegbar ist.

Eine zweckmäßige Ausführungsform zeichnet sich
dadurch aus, daß der Probeschneidbrenner um eine Achse senkrecht zur Stranggußvorschubrichtung verschwenkt.

Gemäß einer vorteilhaften Ausführungsform ist der Probeschneidbrenner an einem Schwenkhebel befestigt, der in einer Ebene parallel zum Stranggußwerkstück verschwenkbar ist.

Eine Fortbildung der Erfindung zeichnet sich dadurch aus, daß der Probeschneidbrenner an dem einen Ende des Schwenkhebels befestigt ist und daß an dessen anderem Ende die Kolbenstange eines Stellzylinders mit Kolben angreift.

Dabei ist zweckmäßig das Lager des Schwenkhebels an einem Gleitstück vorgesehen, das auf der Betätigungswelle des Hauptschneidbrenners sitzt.

Gemäß einer Weiterbildung ist vorgesehen, daß das Gleitstück auf der Betätigungswelle des Hauptschneidbrenners in axial unterschiedlichen Positionen festlegbar ist. Mit Vorteil sitzt das Gleitstück auf einer verdrehbaren Zylinderhülse, die die Betätigungswelle des Hauptschneidbrenners umgibt.

Um die möglichen Dickeneinstellungen der Probestücke zu erhöhen, kann eine Vielzahl von Gleitstücken mit Probeschneidbrennern auf der Betätigungswelle des Hauptschneidbrenners angeordnet sein. Um eine genaue Lage zu erreichen, ist vorgesehen, daß der Schwenkhebel die Probeschneidbrenner an einem Anschlag zur Anlage bringt.

Ein optimaler Schutz der Brennschneidmaschine gegenüber dem Stranggußwerkstück wird dadurch erzielt, daß eine die Brennschneidmaschine schützende Abschirmwand zwischen der Brennschneidmaschine und dem Stranggußwerkstück parallel zu diesem verläuft und unter einem Winkel von etwa 90° nach oben zwischen Brennschneidmaschine und dem dieser am nächsten liegenden Probeschneidbrenner sich fortsetzt.

Mit dieser Brennschneidmaschine ist eine wesentliche Verbesserung beim Probeschneiden erreicht, indem mit einem einzigen Probebrenner Probeschnitte an Stücken unterschiedlicher Probendicke durchgeführt werden können. Diese Einstellung kann von einem Steuerstand aus erfolgen und neben der dadurch bewirkten Bedienungserleichterung wird eine vergleichsweise einfache Probeschneideinrichtung mit einem geringen Wartungsaufwand verfügbar gemacht.

Die Erfindung soll nachstehend anhand von Ausführungsbeispielen unter Bezugnahme auf die beigefügten Zeichnungen näher erläutert werden. In den Zeichnungen zeigen:

Fig. 1 eine Brennschneidmaschine mit zwei Probebrennern;

Fig. 2 eine abgewandelte Ausführungsform mit einem verschwenkbaren Probebrenner;

Fig. 3 und 4 eine schematische Darstellung der Lagerung von Hauptbrennern und Probebrennern,

Fig. 5 und 6 eine abgewandelte Ausführungsform.

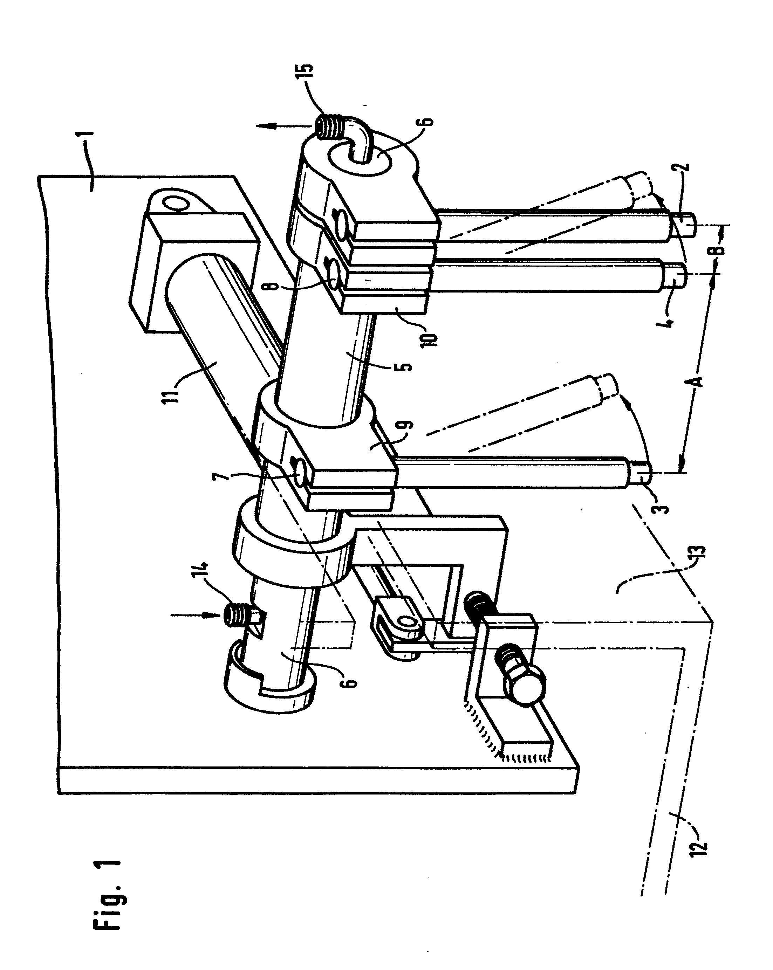

In Fig. 1 ist eine Brennschneidmaschine dargestellt, deren Brennerwagen 1 einen Hauptbrenner 2 zum Brennschneiden und die zwei Probeschneidbrenner 3 und 4 trägt.

Wie in Fig. 1 im einzelnen dargestellt ist, sitzen die Probeschneidbrenner 3 und 4 auf einer Hülse 5, die die Hauptbrennerwelle 6 umgibt. Beispielsweise durch Schrauben 7 und 8 können die Klemmstücke 9 und 10 gelöst werden, um auf der Hülse 5 in axialer Richtung bewegt werden zu können, so daß ein bestimmter Abstand A zwischen den beiden Probeschneidbrennern 3 und 4 eingestellt werden kann. Beispielsweise beträgt so der Abstand zwischen dem Probeschneidbrenner 3 und dem Probeschneidbrenner 4  110 mm, während der Abstand B zwischen dem Probeschneidbrenner 4 und dem benachbarten Hauptbrenner 2  60 mm beträgt. Durch eine Drehbewegung der Hauptschneidbrennerwelle 6 kann der Hauptbrenner 2 verschwenkt werden, während die Probebrenner 3 und 4 beispielsweise um 20° in die in Fig. 1 gestrichelte Lage bewegt werden, indem der Hülse 5 eine Drehbewegung erteilt wird. Das geschieht durch einen Schwenkzylinder 11,

4          0189554

der am Brennerwagen 1 befestigt ist und über eine Kolbenstange an der Hülse 5 angreift, um dieser eine Drehbewegung zu erteilen, so daß die Probebrenner 3 und 4 z.B. um 20° in die in Fig.1 gestrichelte Lage ausschwenken.

Die eigentlichen Antriebsaggregate befinden sich auf dem Brennerwagen und sind durch eine Schutzwand 12 von der Wärmeeinwirkung des nicht dargestellten Werkstücks geschützt, indem die Schutzwand parallel zum Stranggußwerkstück zwischen diesem und der Brennschneidmaschine verläuft und dann in einen senkrechten Wandteil 13 sich nach oben fortsetzt. Dieser senkrechte Wandteil 13 der Schutzwand 12 verläuft zwischen der Brennschneidmaschine bzw. dem Brennerwagen 1 und dem diesem am nächsten angeordneten Probeschneidbrenner 4, so daß nur die Probeschneidbrenner mit der zugeordneten Hülse 5 und der Hauptschneidbrenner mit der Hauptbrennerwelle 6 sich außerhalb der Schutzwand 12, 13 befinden. Die Hülse 5 und die Welle 6 werden durch ein Kühlmedium, vorzugsweise Waser, gekühlt, das durch einen Einlaufstutzen 14 hinter der Schutzwand 13 in die Welle eintritt und an der Stirnseite durch einen Auslaufstutzen 15 abgeführt wird. Auf diese Weise ist sichergestellt, daß die Brennschneidmaschine mit Probeschneideinrichtung nicht der vom Werkstück ausstrahlenden Hitze ausgesetzt ist bzw. eine ausreichende Kühlung gewährleistet ist.

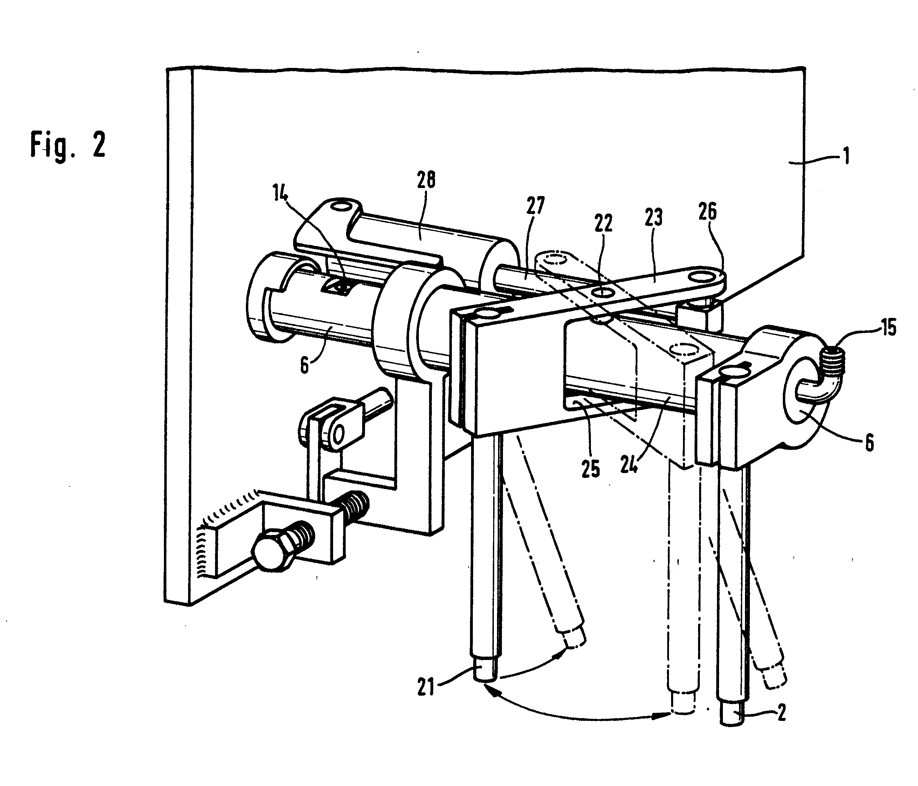

In Fig. 2 ist eine Brennschneidmaschine mit einem Brennerwagen 1 dargestellt, die einen Probeschneidbrenner 21 trägt, der eine Bewegung in einer Ebene parallel zum Stranggußwerkstück ausführt, das sich unter dem Probeschneidbrenner 21 und dem Hauptbrenner 2 erstreckt. Dabei ist der verschwenkbare Probeschneidbrenner 21 um eine Achse 22 verschwenkbar, die senkrecht zur Strangvorschubrichtung oder auch zur Brennerwelle 6 verläuft. Zu diesem Zweck ist der Probeschneidbrenner 21 an einem Schwenkhebel 23 befestigt, der an der Hülse 24 mit seiner Schwankachse 22 gelagert ist. Dabei sind der Probenbrenner 21 und die Schwenkachse 22 auf gegenüberliegenden Seiten der Hülse 24 angeordnet, und der Schwenkhebel 23 hat eine Aussparung 25, durch welche sich die Hülse 24 erstreckt. Dabei ist die Aussparung 25 des Schwenkhebels 23 so bemessen, daß er die Schwenkbewegung um die Hülse 24 auf der Hauptbrennerwelle 6 ausführen kann. An dem dem Probenbrenner gegenüberliegenden Ende 26 des Schwenkhebels 23 greift eine Kolbenstange 27 an, die zu einem Schwenkzylinder 28 gehört, indem ein nicht dargestellter, an der Kolbenstange 27 befestigter Kolben angeordnet ist. Wird der Schwenkzylinder 28 betätigt, so zieht die Kolbenstange 27 das Ende 26 des Schwenkhebels 23 an und verschwenkt den Probebrenner 21 in die in Fig. 2 gestrichelt dargestellte Position benachbart dem Hauptbrenner 2. Durch eine Schwenkbewegung um die Achse der Brennerwelle 6 können Probe- und Hauptbrenner etwa um 20° um die Achse der Hauptbrennerwelle 6 geschwenkt werden, wie es bereits im Zusammenhang mit Fig. 1 beschrieben wurde. Die Hauptbrennerwelle 6 kann, wie in Fig. 1 beschrieben, wieder mit einem Kühlmittel durchflossen werden, wozu ein Kühlmitteleinflußstutzen 14 und ein Kühlmittelabflußstutzen 15 vorgesehen sind. Ebenfalls kann die Brennschneidmaschine wieder durch eine in Fig. 1 dargestellte Schutzwand 12, 13 abgeschirmt sein.

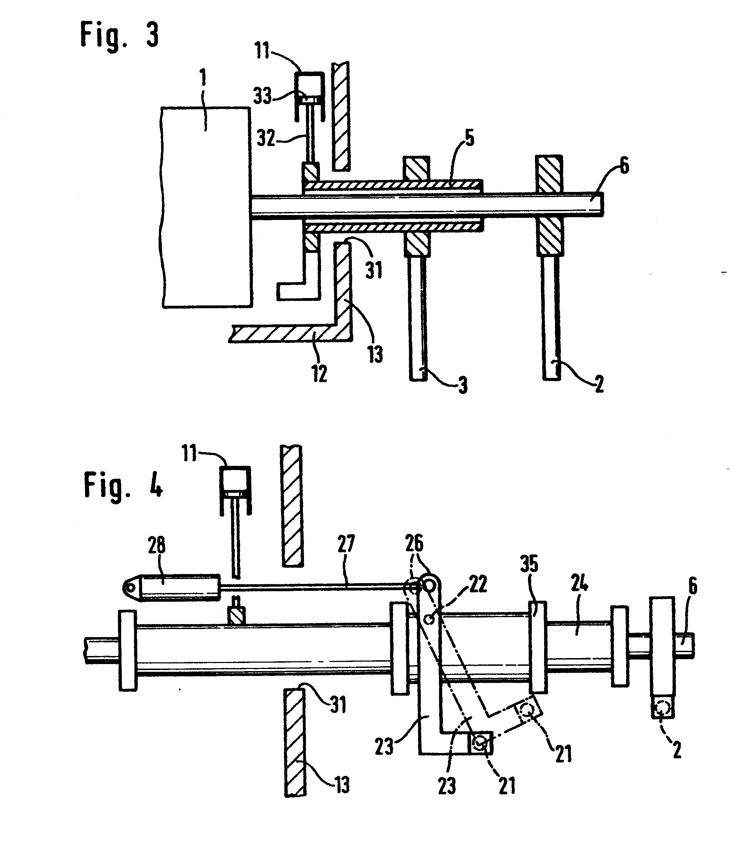

In Fig. 3 ist in schematischer Darstellung die Anordnung von Brenner und Wellen dargestellt. Durch eine Öffnung 31 in der Schutzwand 13 erstreckt sich die Hauptbrennerwelle 6, die an ihrem vorderen Ende den Hauptbrenner 2 trägt. Um die Hauptbrennerwelle 6 ist die Hülse 5 angeordnet, auf der der Probenbrenner 3 sitzt. Die Hülse 5 ist mit dem Schwenkzylinder 11 über eine Kolbenstange 32 verbunden, die in einen Kolben 33 ausläuft, der am Schwenkzylinder 11 angeordnet ist. Die Welle 6 ist verschwenkbar durch einen Antrieb, der auf dem Brennerwagen 1 angeordnet ist. Auf diese Art und Weise ist es möglich, unabhängig voneinander den Proben- und den Hauptbrenner zu bewegen. In entsprechender Weise kann auch auf der Hülse 5 bzw. 24 in Fig. 2 ein Schwenkhebel 23 für einen Probenbrenner montiert sein.

In Fig. 4 ist auf der Hülse 24, die die Haupt-

brennerwelle 6 umgibt, ein Gleitstück 35 dargestellt, auf dem ein um die Achse 22 schwenkbarer Hebel 23 befestigt ist. Am Ende 26 des Hebels 23 greift die Kolbenstange 27 des Stellzylinders 28 an. Wird die Kolbenstange 27 angezogen, bewegt sich der Hebel 23 in die in Fig. 4 gestrichelt dargestellte Position, und der Probenbrenner 21 wird in eine Lage in die Nähe des Hauptbrenners 2 bewegt, der auf der Brennerwelle 6 sitzt, die von der Hülse umgeben wird. Die eigentliche Brennschneidmaschine ist wieder durch die Schutzwand 13 abgeschirmt, durch deren Öffnung 31 sich die Kolbenstange 27 mit der Brennerwelle 26 und der darauf sitzenden Hülse 24 erstreckt. Diese kann von dem Schwenkzylinder 11 wiederum bewegt werden, wie es bereits in Fig. 3 beschrieben worden ist.

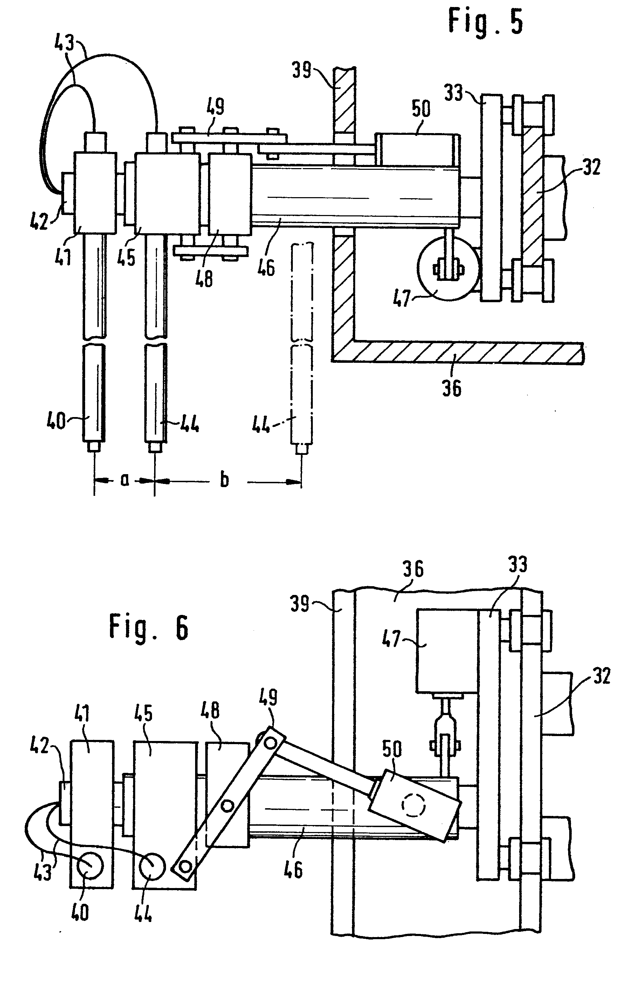

In den Fig. 5 und 6 sind weitere Ausführungsformen der Brennschneidmaschine dargestellt. Dabei ist die nach oben abgewinkelte Ausführungsform der Schutzwand 36 sehr gut aus Fig. 5 zu entnehmen. Die Brennerhülse 46 mit dem Brennerarm 42 erstreckt sich durch den senkrechten Teil 39 der Schutzwand 36. Der Brennerarm 42 trägt an seinem vorderen Ende den Brennerhalter 41, in dem der Hauptbrenner 40 sitzt. In einem inneren Hohlraum des Brennerarms 42 verlaufen die Gaszuführungsleitungen 43 und sind auf diese Weise ebenfalls geschützt. Der Brennerwagen 33 ist vollständig hinter der Schutzwand 36, 39 angeordnet und damit praktisch restlos von störenden Einflüssen geschützt. Die auf dem Brennerarm 42 sitzende Brennerhülse 46 trägt an ihrem vorderen Ende den Probebohrer 44 im Brennerhalter 45, und am hinteren Ende innerhalb der Schutzwand 36, 39 ist am Brennerwagen 33 ein Preßluftzylinder 47 angebracht, der an die Brennerhülse 46 angelenkt ist und diese drehen kann, wodurch die Probebrenner 44 aus dem Spritzbereich des Hauptbrenners 40 herausgeschwenkt werden können. Da zwei Probebrenner 44 bzw. Brennerpaare, abgesehen vom großen Aufwand an Magnetventilen und Druckminderern, am Brennerarm 42 sich immer noch gegenseitig verspritzen, andererseits aber die Probenstückdicken feststehen, ist es möglich, mit nur einem Probebrenner 44 je Hauptbrenner 40 zu arbeiten, wenn dieser mittels eines Hebels aus einer Stellung mit dem Abstand a vom Hauptbrenner 40 für ein dünneres Probestück in eine Stellung mit dem zusätzlichen Abstand b zum Hauptbrenner 40 geschwenkt wird. Dazu trägt die Brennerhülse 46 ein verschieb- und festlegbares Schwenklager 48, an dem das Schwenkhebelpaar 49 sitzt, das am vorderen Ende den Brennerhalter 45 mit dem Probebrenner 44 trägt. An einem Gegenhebel des Schwenkhebels 49 greift die durch den Strahlungsschirm 39 und ebenfalls durch den Schlitz der Schutzwand 39 verlaufende Kolbenstange des Schwenkzylinders 40 an, oder ebenfalls auf der Brennerhülse, aber hinter der Schutzwand 36, 39 sitzt und somit beim Wegdrehen des Probebrenners 44 erst im Spritzbereich mitdreht. Der Schwenkzylinder 45 bewirkt ein Vergrößern des Abstandes a zwischen Hauptbrenner 40 und Probebrenner 44 auf den Gesamtabstand (a + b) oder ein Verkleinern dieses Abstandes auf den Mindestabstand a.

Patentansprüche

1.　Brennschneidmaschine zum Schneiden von Stranggußstücken mit einer am Brennerwagen angeordneten Probeschneideinrichtung zur Erzielung von Probeschnitten an Werkstücken unterschiedlicher Probendicke, dadurch gekennzeichnet, daß die Probeschneideinrichtung einen Probeschneidbrenner (2; 21) aufweist, der in verschiedenen Schneidpositionen bewegbar ist.

2.　Brennschneidmaschine nach Anspruch 1, dadurch gekennzeichnet, daß der Probeschneidbrenner (21) um eine senkrecht zur Stranggußvorschubrichtung verlaufende Achse (22) verschwenkbar ist.

3.　Brennschneidmaschine nach Anspruch 1 oder 2, dadurch gekennzeichnet, daß der Probeschneidbrenner (21) an einem Schwenkhebel (23) befestigt ist, der eine Bewegung in einer Ebene parallel zum Stranggußwerkstück ausführt.

4.　Brennschneidmaschine nach einem der Ansprüche 1 bis 3, dadurch gekennzeichnet, daß der Probeschneidbrenner (21) an dem einen Ende des Schwenkhebels (23) befestigt ist und daß an dessen anderem Ende (26) die Kolbenstange (27) eines Stellzylinders (28) mit Kolben angreift.

5.　Brennschneidmaschine nach einem der Ansprüche 1 bis 4, dadurch gekennzeichnet, daß das Lager (22) des Schwenkhebels an einem Gleitstück (35) vorgesehen ist, das auf der Betätigungswelle (6) des Hauptschneidbrenners (2) sitzt.

6.　Brennschneidmaschine nach einem der Ansprüche 1 bis 5, dadurch gekennzeichnet, daß das Gleitstück (9, 10; 35) auf der Betätigungswelle (6) des Hauptschneidbrenners (2) in axial unterschiedlichen Positionen festlegbar ist.

7.     Brennschneidmaschine nach Anspruch 5 oder 6, dadurch gekennzeichnet, daß das Gleitstück (9, 10; 35) auf einer verdrehbaren Zylinderhülse (5; 24) sitzt, die die Betätigungswelle (6) des Hauptschneidbrenners (2) umgibt.

8.     Brennschneidmaschine nach einem der Ansprüche 5 bis 7, dadurch gekennzeichnet, daß eine Vielzahl von Gleitstücken (9, 10) mit Probeschneidbrennern (3, 4) auf der Betätigungswelle (6) des Hauptschneidbrenners (2) befestigt ist.

9.     Brennschneidmaschine nach einem der Ansprüche 3 bis 8, dadurch gekennzeichnet, daß Anschläge vorgesehen sind, an denen der Schwenkhebel (23) den Probeschneidbrenner (21) zur Anlage bringt.

10.     Brennschneidmaschine nach einem der Ansprüche 1 bis 9, dadurch gekennzeichnet, daß eine Schutzwand (12, 13) zwischen der Brennschneidmaschine (1) und dem Stranggußwerkstück parallel zu diesem verläuft und unter einem Winkel von etwa 90° nach oben zwischen Brennschneidmaschine (1) und dem dieser am nächsten angeordneten Probeschneidbrenner (3; 21) sich fortsetzt.

0189554

Fig. 1

Fig. 2

0189554

Fig. 3

Fig. 4

0189554

Fig. 5

Fig. 6

**Europäisches Patentamt**

**EUROPÄISCHER RECHERCHENBERICHT**

0189554
Nummer der Anmeldung

EP  85 11 5237

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | DE-U-8 435 580  (GEGA GESELLSCHAFT FÜR GASETECHNIK LOTZ GMBH & CO. KG) * vollstä * | 1-10 | G 01 N    1/04 <br> B 22 D   11/126 <br> B 23 K    7/02 |
| | --- | | |
| A | DE-B-2 347 950  (KAWASAKI JUKOGYO K.K.) * Anspruch 1 * | 1 | |
| | ----- | | |
| | | | **RECHERCHIERTE SACHGEBIETE (Int. Cl.4)** |
| | | | B 22 D   11/00 <br> B 23 K    7/00 <br> G 01 N    1/00 |

Der vorliegende Recherchenbericht wurde für alle Patentansprüche erstellt

| Recherchenort <br> BERLIN | Abschlußdatum der Recherche <br> 26-03-1986 | Prüfer <br> WUNDERLICH J E |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82